# EUROPÄISCHE PATENTSCHRIFT

(11) **EP 1 948 459 B1**
(45) Veröffentlichungstag und Bekanntmachung des Hinweises auf die Patenterteilung: **30.06.2010**
(21) Anmeldenummer: 06846977.4
(22) Anmeldetag: 09.11.2006
(51) Int. Cl.: B60J 10/00, B60J 10/02

(54) **SCHEIBENEINHEIT MIT DARAN MONTIERTER ZIERLEISTE**
WINDOW UNIT HAVING DECORATIVE STRIP MOUNTED THEREON
UNITE DE VITRE SUR LAQUELLE EST MONTEE UNE LANGUETTE DECORATIVE

(30) Priorität: 17.11.2005 DE 102005054721
(43) Veröffentlichungstag der Anmeldung: 30.07.2008
(73) Patentinhaber: RICHARD FRITZ GMBH + CO. KG, 74354 Besigheim (DE)
(72) Erfinder: HAUSE, Roland, 74336 Brackenheim (DE)
(74) Vertreter: Kastner, Hermann
(86) Internationale Anmeldenummer: PCT/EP2006/010711
(87) Internationale Veröffentlichungsnummer: WO 2007/057118

(56) Entgegenhaltungen:
- EP-A2- 0 148 449
- DE-A1- 4 106 715
- FR-A1- 2 340 217
- US-A1- 2003 075 949

## Beschreibung

Bei Scheibeneinheiten aus Scheibe und Rahmen von Automobilen wird manchmal entlang einem vorgegebenen Längenabschnitt des Rahmens eine Zierleiste angebracht. Dafür werden in diesem Längenabschnitt des Rahmens Halteelemente für die Zierleiste angeordnet. Bei einer bekannten Ausführungsform (DE 198 18 153 A1) werden entlang des betreffenden Längenabschnittes des Rahmens für die Halteelemente Grundkörper aus einem Werkstoff höherer Festigkeit eingeformt. Sie werden bei der Herstellung des Rahmens in die Spritzform eingelegt und darin mittels Positionierelementen positioniert. Nach dem Ausformen der Scheibeneinheit werden überstehende Teile der Positionierelemente entfernt. Auf diese Grundkörper werden später Halteklammern aus Metall aufgeschoben, die einerseits in Nuten der Grundkörper eingreifen und andererseits Rastflügel aufweisen, an denen die Zierleiste eingeklipst wird.

Diese Art der Halterung einer Zierleiste wird bei Scheibeneinheiten verwendet, bei denen der Rahmen in den Flächenbereich der Scheibe weit hineinragt und daher die Halterung für die Zierleiste in diesem Flächenbereich des Rahmens untergebracht werden kann.

Bei Scheibeneinheiten, bei denen die Grundrissfläche des Rahmens zum größeren Teil außerhalb der Scheibe gelegen ist, kann die Verankerung einer Zierleiste nicht mittels eines eingebetteten Grundkörpers erreicht werden.

Der Erfindung liegt die Aufgabe zugrunde, auch für solche Scheibeneinheiten eine Halterung für Zierleisten zu schaffen, die zudem noch leicht zu montieren ist.

Diese Aufgabe wird durch eine Scheibeneinheit mit den im Anspruch 1 angegebenen Merkmalen gelöst.

Dadurch, dass die Scheibeneinheit neben dem der Verbindung mit der Scheibe dienenden ersten Profilabschnitt einen zweiten Profilabschnitt aufweist, in dessen Grundrissbereich der Rahmen mit wenigstens einer Anlagefläche für die Zierleiste und mit wenigstens einer durchgehenden Ausnehmung versehen ist, wird dort ein erster Teil einer Halterung für die Zierleiste geschaffen. Dadurch, dass an der Unterseite der Zierleiste wenigstens ein Längenabschnitt vorhanden ist, der eine Ausnehmung mit einer Querschnittsverengung aufweist, und dadurch, dass eine Halteleiste mit einer Querschnittserweiterung vorhanden ist, wird ein zweiter Teil der Halterung geschaffen. Dadurch, dass an der Halteleiste eine Anschlagplatte vorhanden ist, die die Ausnehmung am Rahmen zum Teil überragt, wird ein dritter Teil der Halterung geschaffen. Alle Teile der Halterung zusammen ermöglichen es, an der auf der Anlagefläche des Rahmens aufgelegten Zierleiste die durch die Ausnehmung hindurchgreifende Halteleiste einzuklipsen und mittels der Anschlagplatte am Rahmen festzuhalten.

Durch eine Ausgestaltung der Scheibeneinheit nach Anspruch 2 wird die Querschnittserweiterung der Halteleiste elastischer, wodurch das Einklipsen an der Zierleiste erleichtert wird.

Durch eine Ausgestaltung der Scheibeneinheit nach Anspruch 3 wird eine Mehrzahl von Halterungen für die Zierleiste geschaffen, mit denen auch längere Zierleisten sicher festgehalten werden können.

Bei einer Ausgestaltung der Scheibeneinheit nach Anspruch 4 kann bei offener Ausnehmung die Halteleiste am Rahmen seitlich eingeschoben und herausgezogen werden wohingegen bei geschlossener Ausnehmung der Halt besser ist.

Bei einer Ausgestaltung der Scheibeneinheit nach Anspruch 5 bilden die Halteleisten eine Baueinheit, so dass sie gemeinsam am Rahmen angesetzt werden können und gemeinsam davon abgenommen werden können.

Mit einer Ausgestaltung der Scheibeneinheit nach Anspruch 6 können die Zierleiste und ihre Halterung noch besser positioniert und der richtigen Relativlage besser festgehalten werden.

Im Folgenden wird die Erfindung anhand eines in den Zeichnungen dargestelltes Ausführungsbeispieles näher erläutert. Es zeigen:
- Fig. 1: einen ausschnittweise dargestellten Querschnitt einer Scheibeneinheit mit Rahmen und einer am Rahmen angeordneten Zierleiste in Kombination mit zwei Karosserieteilen;
- Fig. 2: einen ausschnittweise dargestellten Querschnitt der Scheibeneinheit gemäß Fig. 1 mit Zierleiste und Halteleiste im zusammengefügten Zustand ohne Karosserieteile;
- Fig. 3: einen ausschnittweise dargestellten Querschnitt der Scheibeneinheit nach Fig. 2 mit Zierleiste und Halteleiste in Explosionsdarstellung:
- Fig. 4: eine ausschnittweise dargestellte perspek- tivische Ansicht der Scheibeneinheit ohne Zier- leiste und Halteleiste;
- Fig. 5: eine ausschnittweise dargestellte perspek- tivische Ansicht der Halteleiste für die Zier- leiste;.
- Fig. 6: eine ausschnittweise dargestellte perspek- tivische Ansicht der Scheibeneinheit gemäß Fig. 4 mit eingesetzter Halteleiste;
- Fig. 7: eine ausschnittweise dargestellte perspek- tivische Ansicht der Zierleiste;
- Fig. 8: eine ausschnittweise dargestellte perspek- tivische Ansicht der Scheibeneinheit gemäß Fig. 6 mit aufgesetzter Zierleiste;

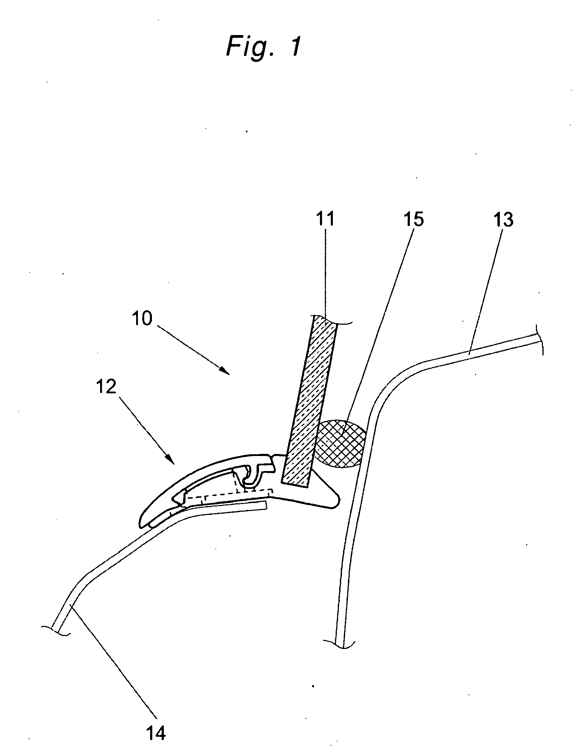

Aus Fig. 1 ist eine Scheibeneinheit 10 mit einer Scheibe 11 und einem Rahmen 12 ersichtlich, der mit einer Zierleiste ausgerüstet ist. Die Scheibeneinheit 10 ist zusammen mit zwei Karosserieteilen 13 und 14 dargestellt, an denen die Scheibeneinheit 10 im eingebauten Zustand anliegt, wobei sie an dem einen Karosserieteilen 13 mittels einer Klebstoffraupe 15 befestigt ist.

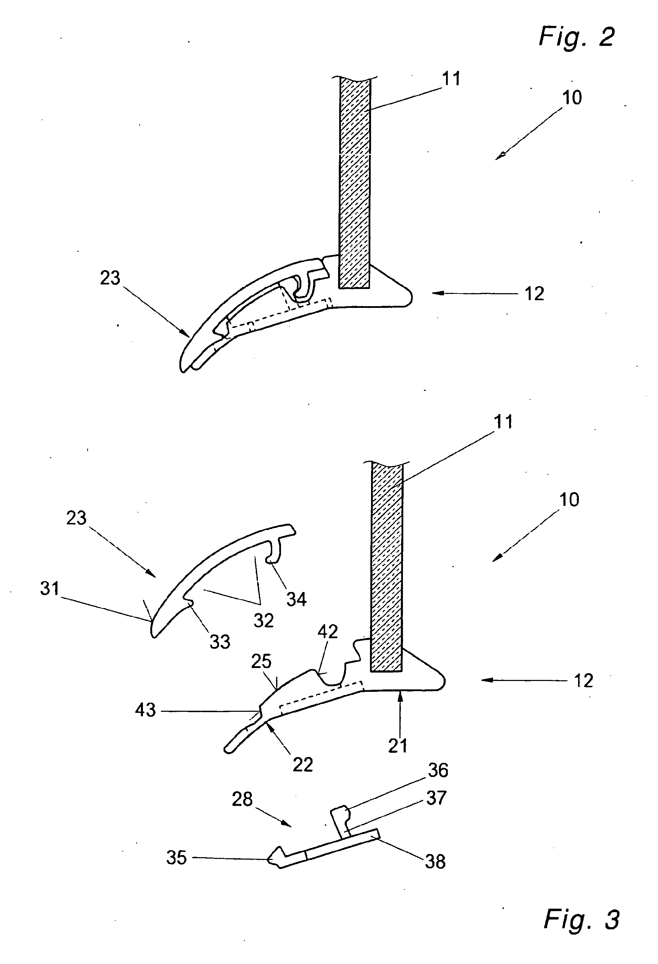

Wie aus der Einzeldarstellung in Fig. 2, noch mehr aber der Explosionsdarstellung in Fig. 3, zu entnehmen ist, weist das Rahmenprofil zwei Profilabschnitte 21 und 22 auf, die unterschiedlichen Zwecken dienen.

Der erste Profilabschnitt 21 dient der Verbindung des Rahmens 12 mit der Scheibe 11. Dem entsprechend erstreckt der Profilabschnitt 21 sich entlang des gesamten Randes der Scheibe 11. Der Profilabschnitt 21 ist an drei Seiten des Randbereiches der Scheibe 11 daran angeformt. Anstelle der dargestellten Ausführungsform kann der Profilabschnitt 21 auch nur an zwei oder gar nur an einem Randbereich der Scheibe anliegen und mit ihr verbunden sein.

Je nach den Gegebenheiten der Karosserie kann der Profilabschnitt 21 in anderen Abschnitten des Rahmens 11 eine ganz andere als die dargestellt Umrisslinie haben.

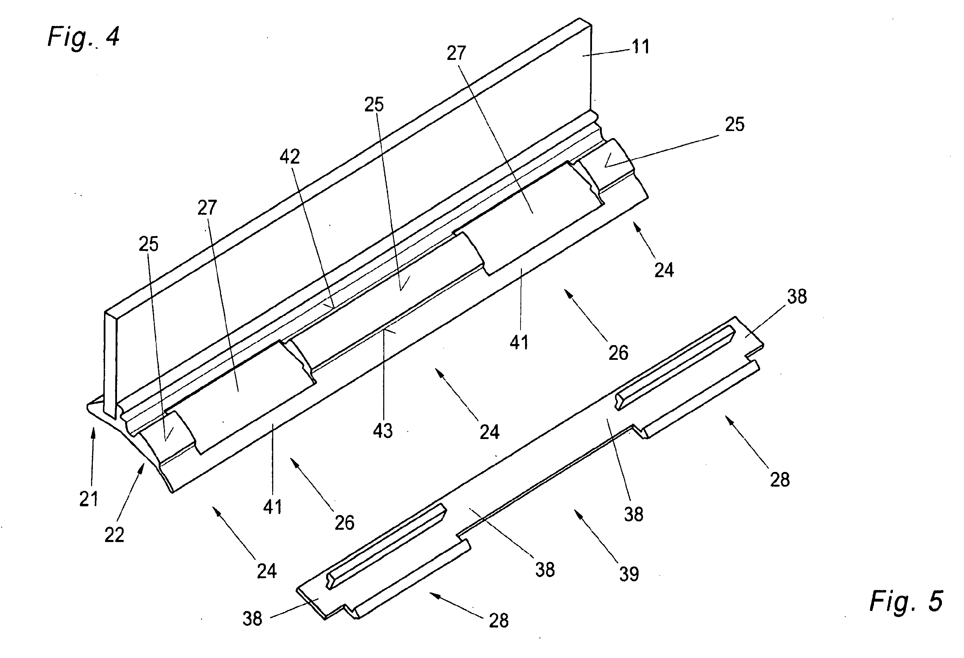

In einem vorgegebenen Umfangsabschnitt der Scheibeneinheit 10 und damit in einem vorgegebenen Längenabschnitt des Rahmens 12 ist neben dem ersten Profilabschnitt 21 ein zweiter Profilabschnitt 22 vorhanden, der der Verbindung mit einer Zierleiste 23 dient. Dieser Längenabschnitt des Rahmens 12 hat zumindest näherungsweise die Form einer langgestreckten Leiste (Fig.4).

Je nach der Länge der Zierleiste 23 weist der Rahmen 11 im Bereich seines zweiten Profilabschnittes 22 zwei oder mehr Längenabschnitte 24 auf, die eine Anlagefläche 25 für die Zierleiste 23 aufweisen (Fig.4). Dazwischen weist der Rahmen 12 Längenabschnitte 26 mit je einer durch den Profilabschnitt 22 hindurchgehenden Ausnehmung 27 für eine Halteleiste 28 auf (Fig.5).

Wie insbesondere aus Fig.3 ersichtlich ist, hat die Zierleiste 23 eine glatte, leicht gewölbte Oberseite 31. Auf ihrer Unterseite weist die Zierleiste 23 eine Ausnehmung 32 mit einer Querschnittsverengung auf. Diese Querschnittsverengung wird durch zwei von einander entfernt angeordnete Profilabschnitte 33 und 34 gebildet, deren gegenseitiger Abstand geringer als derjenige der daran anschließenden Umrisslinie der Ausnehmung 32 ist.

Wie in Fig.3 angedeutet ist, weist jede Halteleiste 28 auf der der Zierleiste 23 zugekehrten Seite eine Querschnittserweiterung auf, die durch zwei voneinander entfernt angeordnete Profilabschnitte 35 und 36 gebildet werden. Ihr gegenseitiger Außenabstand ist größer als derjenige der daran anschließenden Umrisslinie der Halteleiste 28. Zur Bildung eines Klipseffektes beim Zusammenfügen der Zierleiste 23 mit der Halteleiste 28 ist der Außenabstand der beiden Profilabschnitte 35 und 36 der Halteleiste 28 um ein der Elastizität der Werkstoffe der Zierleiste 23 und der Halteleiste 28 entsprechendes Maß größer als der Innenabstand der beiden Profilabschnitte 33 und 34 an der Ausnehmung 32 der Zierleiste 23.

Dieser Klipseffekt wird dadurch unterstützt, dass an der Halteleiste 28 der eine Profilabschnitt 36 für die Querschnittserweiterung an einer Rippe 37 angeordnet ist, die zumindest annähernd rechtwinkelig zum übrigen Teil der Halteleiste 28 ausgerichtet ist.

Wie aus Fig.4 ersichtlich ist werden am zweiten Profilteil 22 des Rahmens 12 die Anlagenflächen 25 für die Zierleiste 23 durch die Ausnehmungen 27 für die Halteleiste 28 unterbrochen.

Wie aus einem Vergleich von Fig.2 und Fig.3 ersichtlich ist, greifen im zusammengefügten Zustand (Fig.2) die Profilabschnitte 35 und 36 der Halteleiste 28 durch die Ausnehmung 27 des Rahmen-Profilabschnittes 22 hindurch in die Ausnehmung 32 der der Zierleiste 23 hinein, um sich an deren Profilabschnitten 33 und 34 einzuklipsen. Damit die Halteleiste 28 dennoch einen halt am Rahmen 12 bietet, weist jede Halteleiste 28 an der von der Zierleiste 23 abgekehrten Seite eine Anschlagplatte 38 auf (Fig.5), die zumindest annähernd parallel zur Unterseite des zweiten Profilabschnittes 22 des Rahmens 12 ausgerichtet ist und deren Grundriss zumindest bereichsweise über den Grundriss der Ausnehmung 32 am Profilabschnitt 22 hinausgeht, so dass damit die Anschlagleisten 28 an der Unterseite des Profilabschnittes 22 anliegen. Diese Anlage wird dadurch begünstigt, dass die Anschlagplatten 38 aller Halteleisten 28 in der Längsrichtung des Rahmens 12 aneinander anschließen und eine gemeinsame Anschlagleiste 39 bilden (Fig.5).

Wie aus Fig.4 ersichtlich ist, sind die Ausnehmungen 27 im Rahmen-Profilteil 22 an ihrem vom ersten Profilabschnitt 21 abgekehrten Rand durch einen Steg 41 geschlossen. Dadurch können die Halteleisten 28 nur von unten her in die Ausnehmungen 27 eingeführt werden. Wenn es erwünscht ist, die Halteleisten seitlich in Position zu bringen, dann ist es zweckmäßig, die Stege 41 am Rand der Ausnehmungen 27 wegzulassen.

Wie aus Fig.4 ersichtlich ist, sind an der Oberseite des zweiten Profilabschnittes 22 des Rahmens 12 Positionierflächen 42 und 43 angeordnet. Diese sind parallel zur Längserstreckung des Rahmens 12 ausgerichtet. Sie haben eine Flächennormale, die in der Querrichtung geneigt ist. An der Unterseite der Zierleiste 23 im Bereich ihrer Ausnehmung 32 sind ebenfalls Positionierflächen angeordnet, die auf die Positionierflächen 42 und 43 am Profilteil 22 abgestimmt sind. Je nach dem Aufbau der Zierleiste und des zweiten Profilteils 22 des Rahmens 12 können auch aufeinander abgestimmte Positionierflächen angeordnet sein, die quer zur Längserstreckung zur Zierleiste 23 und des Rahmens 12 ausgerichtet sind.

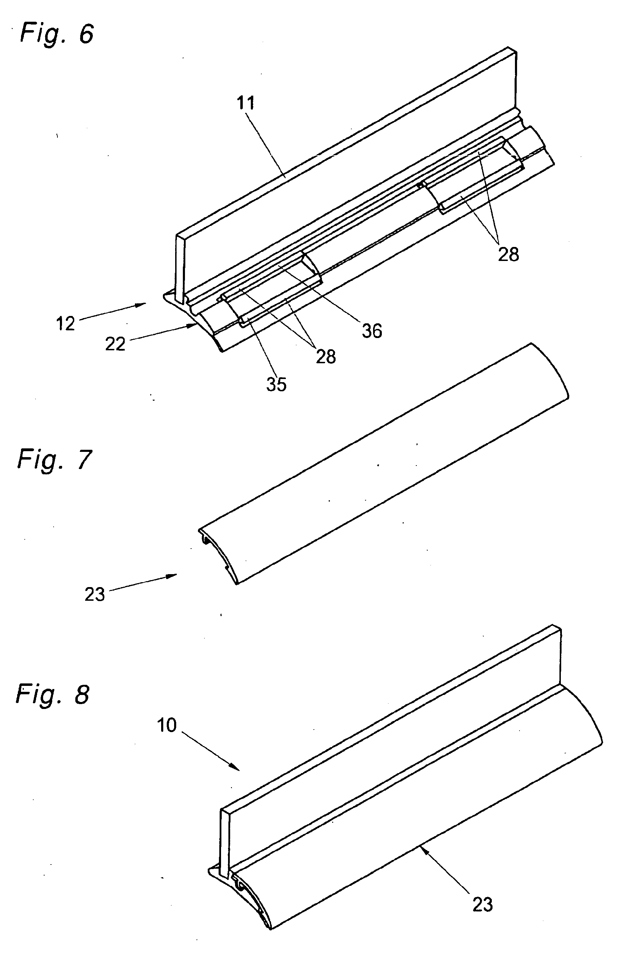

Die-Montage der Zierleiste erfolgt in der Weise, wie sie sich aus der Abfolge der Fig.6 - 8 ergibt. Die Halteleisten 28 werden von der Unterseite des Profilabschnittes 22 her durch dessen Ausnehmungen 27 hindurch gesteckt, so dass ihre Profilabschnitte 35 und 36 aus der Ausnehmung herausragen (Fig.6). Auf diese Profilabschnitte 35 und 36 der Halteleisten 28 wird die Zierleiste 23 (Fig.7) aufgesetzt und bis zum Einrasten oder Einklipsen an die Halteleisten 28 angedrückt. Daraus ergibt sich dann der Endzustand, der aus Fig.8 ersichtlich ist.

### Bezugszeichenliste

- 10: Scheibeneinheit
- 11: Scheibe
- 12: Rahmen
- 13: Karosserieteil
- 14: Karosserieteil
- 15: Klebstoffraupe

- 21: Profilabschnitt
- 22: Profilabschnitt
- 23: Zierleiste
- 24: Längenabschnitte
- 25: Anlagefläche
- 26: Längenabschnitte
- 27: Ausnehmung
- 28: Halteleiste

- 31: Oberseite
- 32: Ausnehmung
- 33: Profilabschnitt
- 34: Profilabschnitt
- 35: Profilabschnitt
- 36: Profilabschnitt
- 37: Rippe
- 38: Anschlagplatte
- 39: Anschlagleiste

- 41: Stege
- 42: Positionierfläche
- 43: Positionierfläche

## Patentansprüche

1. Scheibeneinheit aus Scheibe und Rahmen, der mit einer Zierleiste ausrüstbar ist, mit den Merkmalen:
- der Rahmen (12) weist entlang seiner gesamten Längserstreckung einen der Verbindung mit der Scheibe (11) dienenden ersten Profilabschnitt (21) auf,
- - der an einem Randbereich oder an zwei oder drei Randbereichen der Scheibe (11) an diese anschließt und
- - der an der Scheibe (11) angeformt ist, mit der Scheibe verklebt ist oder durch Formschluss an der Scheibe gehalten wird,
**gekennzeichnet durch** die Merkmale:
- der Rahmen (12) weist in einem vorgegebenen Längenabschnitt einen an den ersten Profilabschnitt (21) anschließenden zweiten Profilabschnitt (22) auf, der der Verbindung mit der Zierleiste (23) dient,
- im Bereich des zweiten Profilabschnittes (22) weist der Rahmen (12) wenigstens einen ersten Längenabschnitt (24) auf, der eine Anlagefläche (25) für die Zierleiste (23) aufweist,
- im Bereich des zweiten Profilabschnittes (22) weist der Rahmen (12) wenigstens einen zweiten Längenabschnitt (26) auf, der eine im Grundrissbereich der Zierleiste (23) gelegene durchgehende Ausnehmung (27) für eine Halteleiste (28) aufweist,
- die Halteleiste (28) hat eine Längserstreckung, die kleiner als diejenige der Ausnehmung (27) für die Halteleiste (28) ist,
- an der Unterseite der Zierleiste (23) ist wenigstens ein Längenabschnitt vorhanden, der eine Ausnehmung (32) aufweist, deren Seitenwände am äußeren Ende in je einen Profilabschnitt (33; 34) übergehen, deren gegenseitiger Abstand (Innenabstand) geringer als derjenige des einwärts daran anschließen Abschnittes der Seitenwände der Ausnehmung (32) ist und **dadurch** eine Querschnittsverengung der Ausnehmung (32) bildet,
- die Halteleiste (28) weist wenigstens einen Längenabschnitt auf, an dessen der Zierleiste (23) zugekehrten Seite zwei voneinander entfernt angeordnete Profilabschnitte (35;36) angeordnet sind, deren gegenseitiger äußerer Abstand (Außenabstand) größer als derjenige der einwärts daran anschließenden Profilabschnitte ist und **dadurch** eine Querschnittserweiterung der Halteleiste (28) bilden,
- der Innenabstand der beiden Profilabschnitte (33; 34) am Ende der Seitenwände der Ausnehmung (32) der Zierleiste (23) ist zur Bildung eines Klipseffektes um ein der Elastizität der Werkstoffe der Zierleiste (23) und der Halteleiste (28) entsprechendes Maß kleiner als der Außenabstand der beiden Profilabschnitte (35; 36) an der Halteleiste (28).,
- die Halteleiste (28) weist an der von der Zierleiste (23) abgekehrten Seite eine Anschlagplatte (38) auf,
- - die zumindest annähernd parallel zur Unterseite des zweiten Profilabschnittes (22) des Rahmens (12) ausgerichtet ist und
- - deren Grundriss zumindest bereichsweise über den Grundriss der Ausnehmung (27) für die Halteleiste (28) hinausgeht.

2. Scheibeneinheit nach Anspruch 1, mit den Merkmalen:
- wenigstens ein Profilabschnitt (36) der beiden Profilabschnitte (35; 36) für die Querschnittserweiterung der Halteleiste (28) ist an einer Rippe (37) angeordnet, die zumindest annähernd senkrecht zum übrigen Teil der Halteleiste (28) ausgerichtet ist.

3. Scheibeneinheit nach Anspruch 1 oder 2, mit den Merkmalen:
- der außerhalb des ersten Profilabschnitt (21) gelegene Längenabschnitt des Rahmens (12) hat die Form einer langgestreckten Leiste,
- dieser Längenabschnitt des Rahmens (12) weist zwei oder mehr Anlageflächen (25) für die Zierleiste (23) auf,
- dieser Längenabschnitt des Rahmens (12) weist zwei oder mehr Ausnehmungen (27) für eine Halteleiste (28) auf.

4. Scheibeneinheit nach Anspruch 1, 2 oder 3, mit den Merkmalen:
- jede Ausnehmung (27) für eine Halteleiste (28) ist an dem vom ersten Profilabschnitt (21) des Rahmens (12) abgekehrten Rand offen oder durch einen Steg (41) geschlossen.

5. Scheibeneinheit nach Anspruch 3, mit den Merkmalen:
- zumindest ein Teil der Anschlagplatten der Halteleisten (28) oder alle Anschlagplatten (38), schließen in der Längsrichtung aneinander an und bilden eine gemeinsame Anschlagleiste (39).

6. Scheibeneinheit nach einem der Ansprüche 1 bis 5, mit den Merkmalen:
- an der Unterseite der Zierleiste und an der Oberseite des ihr gegenüberliegenden Flächenabschnittes des zweiten Profilabschnittes (22) des Rahmens (12) sind aufeinander abgestimmte Positionierflächen (42;43) angeordnet,
- - die parallel und/oder quer zur Längsrichtung des Rahmens (12) ausgerichtet sind und
- - die eine Flächennormale haben, die in der Längsrichtung bzw. der Querrichtung geneigt ist.

## Claims

1. A windowpane unit formed of a pane and a frame able to be provided with a trim, having the features:
- along its entire longitudinal extension, the frame (12) has a first shaped portion (21) used for connection to the pane (11),
- - which shaped portion (21) adjoins the pane (11) at one edge region or at two or three edge regions thereof and
- - which shaped portion (21) is formed on the pane (11), is stuck to the pane or is held on the pane by a positive connection,
**characterised by** the features:
- in a given longitudinal portion, the frame (12) has a second shaped portion (22) adjoining the first shaped portion (21), which shaped portion (22) is used for connection to the trim (23),
- in the region of the second shaped portion (22), the frame (12) has at least one first longitudinal portion (24) having a contact surface (25) for the trim (23),
- in the region of the second shaped portion (22), the frame (12) has at least one second longitudinal portion (26) having a continuous cutout (27), located in the horizontal projection region of the trim (23), for a holding strip (28),
- the holding strip (28) has a longitudinal extension smaller that that of the cutout (27) for the holding strip (28),
- at the underside of the trim (23) there is present at least one longitudinal portion having a cutout (32) whose lateral walls become at the outer end a respective shaped portion (33; 34) whose distance from one another (internal distance) is less than that of the inwards adjoining portion of the lateral walls of the cutout (32) and thereby forms a cross-sectional constriction of the cutout (32),
- the holding strip (28) has at least one longitudinal portion at whose side facing the trim (23) there are arranged two shaped portions (35; 36) arranged at a distance from one another, whose outer distance (external distance) from one another is greater than that of the inwards adjoining shaped portions and they thereby form a cross-sectional widening of the holding strip (28),
- to form a clip effect, the internal distance apart of the two shaped portions (33; 34) at the end of the lateral walls of the cutout (32) of the trim (23) is smaller than the external distance apart of the two shaped portions (35; 36) at the holding strip (28) by an amount corresponding to the resilience of the materials of the trim (23) and the holding strip (28),
- at the side remote from the trim (23), the holding strip (28) has a stop plate (38)
- - which is oriented at least substantially parallel to the underside of the second shaped portion (22) of the frame (12) and
- - at least regions of whose horizontal projection project beyond the horizontal projection of the cutout (27) for the holding strip (28).

2. A windowpane unit according to claim 1, having the features:
- at least one shaped portion (36) of the two shaped portions (35; 36) for the cross-sectional widening of the holding strip (28) is arranged on a rib (37) oriented at least substantially perpendicular to the remaining part of the holding strip (28).

3. A windowpane unit according to claim 1 or 2, having the features:
- the longitudinal portion, located exterior to the first shaped portion (21), of the frame (12) has the form of an elongated strip,
- this longitudinal portion of the frame (12) has two or more contact surfaces (25) for the trim (23),
- this longitudinal portion of the frame (12) has two or more cutouts (27) for a holding strip (28).

4. A windowpane unit according to claim 1, 2 or 3, having the features:
- at the edge remote from the first shaped portion (21) of the frame (12), each cutout (27) for a holding strip (28) is open or is closed by a crosspiece (41).

5. A windowpane unit according to claim 3, having the features:
- at least some of the stop plates of the holding strips (28) or all stop plates (38) adjoin one another in the longitudinal direction and form a common stop strip (39).

6. A windowpane unit according to any one of claims 1 to 5, having the features:
- matched positioning surfaces (42; 43) are arranged at the underside of the trim and at the upper side of the facing surface portion of the second shaped portion (22) of the frame (12),
- - which positioning surfaces are oriented parallel to and/or transversely to the longitudinal direction of the frame (12) and
- - which positioning surfaces have a surface normal inclined in the longitudinal direction or the transverse direction.

## Revendications

1. Unité de vitre composée d'une vitre et d'un châssis, cette unité étant garnie d'un jonc décoratif, ayant les caractéristiques suivantes :
- le châssis (12) ou un premier segment de profil (21) servant à la liaison avec la vitre (11) sur toute son extension longitudinale,
* ce segment de profil rejoignant une zone de bord ou deux ou trois zones de bord de la vitre (11), et
* ce segment profilé est formé sur la vitre (11) en étant collé à la vitre ou tenu à la vitre par une liaison par la forme,
**caractérisée par** les caractéristiques suivantes :
- dans un segment longitudinal prédéterminé, le châssis (12) ou un second segment de profil (22) adjacent au premier segment de profil (21) servant à la liaison avec le jonc décoratif (23),
- dans la zone du second segment de profil (22), le châssis (12) comporte au moins un premier segment longitudinal (24) ayant une surface d'appui (25) pour le jonc décoratif (23),
- dans la zone du second segment de profil (22), le châssis (12) comporte au moins un second segment longitudinal (26) ayant une cavité (27) continue, située dans la zone de base du jonc décoratif (23) pour recevoir une baguette de retenue (28),
- la baguette de retenue (28) a une extension longitudinale inférieure à celle de la cavité (27) recevant la baguette de retenue (28),
- la face inférieure du jonc décoratif (23) comporte au moins un segment longitudinal muni d'une cavité (32) dont les parois latérales rejoignent à l'extrémité extérieure, chacune un segment de profil (33, 34) et dont l'écartement (écartement intérieur) est inférieur à celui du segment adjacent côté intérieur des parois latérales de la cavité (32) et formant ainsi un rétrécissement de la section de la cavité (32),
- la baguette de retenue (28) a au moins un segment longitudinal sur lequel le côté en regard du jonc décoratif (23), comporte deux segments de profil (35, 36) écartés l'un de l'autre et dont la distance extérieure réciproque (écartement extérieur) est plus grande que celle des segments de profil adjacents côté intérieur et constitue ainsi une extension de section de la baguette de retenue (28),
- pour créer un effet de clipage, l'écartement intérieur des deux segments de profil (33, 34) à l'extrémité des parois latérales de la cavité (32) du jonc décoratif (23) est d'une mesure inférieure à l'écartement extérieur des deux segments de profil (35, 36) de la baguette de retenue (28) en tenant compte de l'élasticité des matériaux du jonc décoratif (23) et de la baguette de retenue (28),
- la baguette de retenue (28) comporte une plaque de butée (38) sur son côté non tourné vers le jonc décoratif (23),
* cette plaque de butée étant alignée au moins sensiblement parallèlement à la face inférieure du second segment de profil (22) du châssis (12), et
* sa forme de base dépasse au moins par zones de la forme de base de la cavité (27) de la baguette de retenue (28).

2. Unité de vitre selon la revendication 1, ayant les caractéristiques suivantes :
- au moins l'un des deux segments de profil (35, 36) pour l'extension de section de la baguette de retenue (28) est prévu sur une nervure (37) qui est au moins sensiblement perpendiculaire à la partie restante de la baguette de retenue (28).

3. Unité de vitre selon la revendication 1 ou 2, ayant les caractéristiques suivantes :
- le segment longitudinal du châssis (12) situé à l'extérieur du premier segment de profil (21) a la forme d'une baguette allongée,
- ce segment longitudinal du châssis (12) comporte deux ou plusieurs surfaces d'appui (25) pour le jonc décoratif (23),
- ce segment longitudinal du châssis (12) comporte deux ou plusieurs cavités (27) pour une baguette de retenue (28).

4. Unité de vitre selon les revendications 1, 2 ou 3, ayant les caractéristiques suivantes :
- le bord non tourné vers le premier segment de profil (21) du châssis (12) de chaque cavité (27) pour une baguette de retenue (28) est ouvert ou est fermé par une entretoise (41).

5. Unité de vitre selon la revendication 3, ayant les caractéristiques suivantes :
- au moins une partie des plaques de butée des baguettes de retenue (28) ou toutes les plaques de butée (38) se rejoignent dans la direction longitudinale ou forment une baguette de butée commune (39).

6. Unité de vitre selon les revendications 1 à 5, ayant les caractéristiques suivantes :
- le côté inférieur du jonc décoratif et le côté supérieur du segment de surface en regard du second segment de profil (22) du châssis (12) ont des surfaces (42, 43) qui se positionnent de manière correspondante,
* ces surfaces sont alignées parallèlement et/ou transversalement à la direction longitudinale du châssis (12), et
* ces surfaces ont une normale inclinée dans la direction longitudinale ou dans la direction transversale.
